# EUROPEAN PATENT APPLICATION

(11) **EP 3 889 860 A1**
(43) Date of publication of application: **06.10.2021**
(21) Application number: 21157296.1
(22) Date of filing: 16.02.2021
(51) Int. Cl.: G06Q 10/10, G06F 3/16

(54) **ELECTRONIC SYSTEM, ELECTRONIC DEVICE AND METHOD FOR CONTROLLING THE ELECTRONIC DEVICE**

(30) Priority: 19.02.2020 CN 202010102115
(71) Applicant: NEXTVPU (SHANGHAI) CO., LTD., Shanghai 201203 (CN)
(72) Inventor: LV, Zhijun, SHANGHAI, Shanghai (CN); CAI, Haijiao, SHANGHAI, Shanghai (CN); FENG, Xinpeng, SHANGHAI, Shanghai (CN); ZHOU, Ji, SHANGHAI, Shanghai (CN)
(74) Representative: de Arpe Fernandez, Manuel

(57) **Abstract**

The present disclosure provides an electronic system, an electronic device and a method for controlling the electronic device. The electronic system includes a first electronic device and at least one second electronic device, each second electronic device being associated with a target item. The first electronic device comprises: a first processing unit configured to determine an identifier of a second electronic device targeted by the first instruction input and generate a search signal specific to the second electronic device; and a first transmitting unit configured to transmit the generated search signal to the second electronic device. The second electronic device includes a second processing unit configured to determine whether the signal received from the first transmitting unit is a search signal specific to the second electronic device, and transmit a control signal to a prompting unit in response to determining that the signal received from the first transmitting unit is a search signal specific to the second electronic device; and the prompt unit configured to perform a prompt operation according to the control signal.

## Description

### TECHNICAL FIELD

The present disclosure relates to the field of electronic devices, and more particularly, to an electronic system capable of supporting search functions, electronic device included in the electronic system, and a method for controlling the electronic device.

### BACKGROUND OF THE INVENTION

People with visual disabilities will encounter many inconveniences in life. Even at home, their frequently used items such as wallets, keys, medicines, and Braille books must be placed in fixed locations. If these items are not in the fixed locations for various reasons, it will be difficult for such people to find them again and must seek help from others. In a changing environment, such as offices, coffee shops, shopping malls, etc., this difficulty becomes more common and difficult to solve.

In addition, for the elderly, due to memory loss, they will often forget where they have put their frequently used items, which brings great inconvenience to life.

### SUMMARY OF THE INVENTION

In view of the above problems, the present disclosure provides an electronic system that may help the people with visual disabilities or the elderly to easily find their items, and may also support functions such as reverse search, voice reminder, battery reminder, memo reminder, etc..

According to one aspect of the present disclosure, an electronic system is provided. The electronic system includes a first electronic device and at least one second electronic device, each second electronic device being associated with a target item, wherein the first electronic device comprises: a first instruction unit configured to receive a first instruction input; a first processing unit configured to determine, based on the first instruction input, an identifier of a second electronic device targeted by the first instruction input, and generate a search signal specific to the second electronic device; and a first transmitting unit configured to transmit the generated search signal specific to the second electronic device to the second electronic device, and wherein the second electronic device comprises: a second receiving unit configured to receive a signal from the first transmitting unit; a second processing unit configured to determine whether the signal received from the first transmitting unit is a search signal specific to the second electronic device, and transmit a control signal to a prompting unit in response to determining that the signal received from the first transmitting unit is a search signal specific to the second electronic device; and the prompt unit configured to perform a prompt operation according to the control signal.

According to another aspect of the present disclosure, an electronic device is provided. The electronic device includes: a first instruction unit configured to receive a first instruction input; a first processing unit configured to determine, based on the first instruction input, an identifier of a second electronic device targeted by the first instruction input, and generate a search signal specific to the second electronic device, wherein the second electronic device is associated with a target item; and a first transmitting unit configured to transmit the generated search signal specific to the second electronic device to the second electronic device.

According to yet another aspect of the present disclosure, a method for controlling the electronic device is provided. The method includes receiving a first instruction input; determining, based on the first instruction input, an identifier of the second electronic device targeted by the first instruction input, and generating a search signal specific to the second electronic device, wherein the second electronic device is associated with a target item; and transmitting the generated search signal specific to the second electronic device to the second electronic device.

The solution of the present disclosure may help the people with visual disabilities or the elderly to easily find their own items. In addition, in some embodiments, it may also support functions such as reverse search, voice reminder, battery reminder, and memo reminder.

### BRIEF DESCROPTION OF THE DRAWINGS

Figure 1 shows a schematic diagram of an electronic system according to embodiments of the present disclosure;
Figure 2 shows a schematic structural block diagram of a first electronic device according to embodiments of the present disclosure; and
Fig. 3 shows a schematic structural block diagram of a second electronic device according to embodiments of the present disclosure.

### DESCRIPTION OF PREFERRED EMBODIMENTS

Hereinafter, each embodiment of the present disclosure will be described in detail with reference to the accompanying drawings, so as to better understand the purpose, features and advantages of the present disclosure. It should be understood that the embodiments shown in the drawings are not intended to limit the scope of the present disclosure, but merely to illustrate the essential spirit of the technical solution of the present disclosure.

In the following description, for the purpose of illustrating various inventive embodiments, certain specific details are set forth to provide a thorough understanding of various inventive embodiments. However, those skilled in the art will recognize that the embodiments may be practiced without one or more of these specific details. In other situations, well-known means, structures, and technologies associated with the present application may not be shown or described in detail so as to avoid unnecessarily obscuring the description of the embodiments.

Unless the context requires otherwise, throughout the specification and claims, the word "including" and its variants, such as "comprising" and "having" should be understood as an open and inclusive meaning, that is, should be interpreted as "including, but not limited to".

Throughout the specification, reference to "one embodiment" or "an embodiment" means that a specific feature, structure, or characteristic described in combination with the embodiment is included in at least one embodiment. Therefore, the appearances of "in one embodiment" or "in an embodiment" in various places throughout the specification do not necessarily all refer to the same embodiment. In addition, specific features, structures, or characteristics may be combined in any manner in one or more embodiments.

In addition, the terms "first", "second", "third", and "fourth" used in the specification and claims are only used to distinguish various objects for clarity of description, and do not limit the size or other order of the objects described.

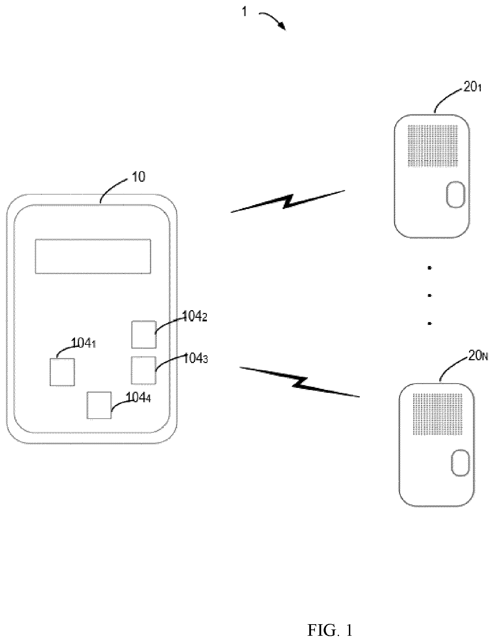

Fig. 1 shows a schematic diagram of an electronic system 1 according to an embodiment of the disclosure. As shown in FIG. 1, the electronic system 1 may include a first electronic device 10 and at least one second electronic device 20₁... 20_{N} (hereinafter collectively referred to as the second electronic device 20). The first electronic device 10 and each second electronic device 20 may communicate wirelessly, for example, through Bluetooth. In the initialization stage, a paired connection with the first electronic device 10 may be established for the second electronic device 20. Specifically, the user may, for example, long press a specific button (such as a "navigation button") on the first electronic device 10 to start a Bluetooth search for the second electronic devices 20 nearby. When a matching second electronic device 20 is found, the first electronic device 10 may establish a first connection with the second electronic device 20, and the first electronic device 10 saves the address (identifier) of the second electronic device 20 and updates the total number of second electronic devices 20 connected to it accordingly. In addition, in case that the first electronic device 10 has a buzzer or voice prompt function, when the user long presses the specific button on the first electronic device 10, the first electronic device 10 may emit a buzzer and/or voice prompt to instruct the user to start the Bluetooth pairing process.

The first electronic device 10 undertakes the main control functions, which may be a separate searching electronic device (such as a form similar to a remote control), or a component of other electronic devices, such as smart speakers, timers, book listeners, radios, recorders, e-books, etc. The second electronic device 20 has a simple structure and is usually small in size, and each may be associated with a target item. For example, each second electronic device 20 may be bound to a target item by means of glue, lanyard, etc., or the second electronic device 20 may also be embedded in a target item as a part of the target item such that finding the second electronic device 20 may find the corresponding target item.

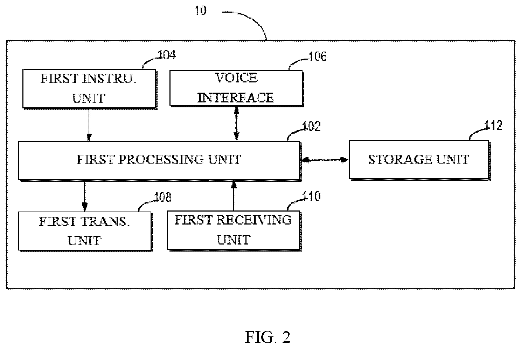

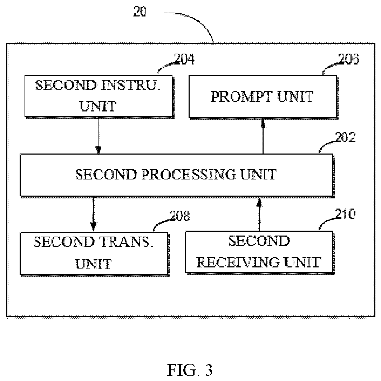

FIG. 2 shows a schematic structural block diagram of the first electronic device 10 according to an embodiment of the present disclosure. Fig. 3 shows a schematic structural block diagram of a second electronic device 20 according to an embodiment of the present disclosure.

As shown in FIG. 2, the first electronic device 10 may include at least some of a first processing unit 102, a first instruction unit 104, a voice interface 106, a first transmitting unit 108, a first receiving unit 110, and a storage unit 112. The first processing unit 102 may be a programmable processor or a microprocessor, for example. The first instruction unit 104 may include, for example, at least one physical or virtual button, such as buttons 104i, 104₂, 104₃, and 104₄ as shown in FIG. 1, which is configured to receive instruction input from a user. Hereinafter, the first instruction unit 104 is described by taking a physical button as an example. However, those skilled in the art may understand that the present disclosure is not limited to this, and the first instruction unit 104 may be any other functional unit or module capable of receiving user instructions. For example, in some other embodiments, the first instruction unit 104 may also include a voice receiving unit, which may receive the user's instruction input after it has received the user's specific wake-up word through the first instruction unit 104 and is awakened, which will not be detailed here. The voice interface 106 includes, for example, a microphone and a speaker, which may receive the user's voice input and play a voice output to the user. The first transmitting unit 108 is configured to transmit signals out according to instructions from the first processing unit 102, which may include, for example, a baseband processing unit, a radio frequency processing unit, an antenna unit, etc.. The first receiving unit 110 is configured to receive signals from other devices such as the second electronic devices 20, and it may also include an antenna unit, a radio frequency processing unit, and a baseband processing unit. The first transmitting unit 108 and the first receiving unit 110 may be implemented by using existing transceiver chips, for example.

As shown in FIG. 3, the second electronic device 20 may include at least some of a second processing unit 202, a second instruction unit 204, a prompt unit 206, a second transmitting unit 208, and a second receiving unit 210. The second processing unit 202 may be a programmable processor or a microprocessor, for example. Since in the present disclosure, the first electronic device 10 undertakes the main control and processing functions, the second processing unit 202 may be implemented by a processing chip with a simpler structure and a lower price. Similar to the first instruction unit 204, the second instruction unit 204 may also include a physical or virtual button, or may include a voice receiving unit configured to receive an instruction input from the user. The prompt unit 206 may be, for example, a buzzer or a speaker, etc., which may emit a buzzer or other sounds under the control of the second processing unit 202. The second transmitting unit 208 and the second receiving unit 210 are similar to the first transmitting unit 108 and the first receiving unit 110, and will not be detailed here.

In addition, the first electronic device 10 and the second electronic device 20 may also include respective power supply units (not shown in the figure). For example, the power supply unit of the first electronic device 10 may be a power adapter connected to a power line, a storage battery or a rechargeable battery, or the like. The power supply unit of the second electronic device 20 may be a micro battery or a rechargeable battery, or the like.

The electronic system 1 according to the present disclosure is designed to have functions such as search function, reverse search function, voice reminder, battery reminder, and memo reminder. The first electronic device 10 and the second electronic device 20 will be described in more detail below in combination with these functions.

### Search Function

The search function means that the user may locate the second electronic device 20 associated with a specific item by operating the first electronic device 10 so as to find the item.

In one implementation, the first instruction unit 104 may receive a first instruction input from the user, and the first instruction input indicates the item/second electronic device 20 that the user wants to find. The first instruction input may be a pressing on a specific button (in case that the first instruction unit 104 is equipped with a physical button for each second electronic device 20, for example) or a pressing on a specific button in a specific manner (for example, the user may indicate the number of the second electronic device 20 that to be searched for by the pressing number or time length on the button). In some embodiments, the first instruction input may be a combination of multiple button operations. For example, the user may find a specific second electronic device 20 by pressing the navigation button (such as a "page up/down button") on the first electronic device 10, and then press a button dedicated for searching items (such as a "confirm" button) to activate the search function for items.

In addition, in some embodiments, the first electronic device 10 may store a voice prompt corresponding to each second electronic device 20, so that when receiving the user's first instruction input, the corresponding voice prompt may also be played so that the user may confirm whether his input is correct by the voice prompt. The voice prompt may be voice tag information recorded by the user himself and/or the identifier or number of the second electronic device 20 preset in the first electronic device 10.

In one example, the first electronic device 10 is preset with the identifier or number of each second electronic device 20. When the user presses the navigation button on the first electronic device 10, the first electronic device 10 may play the identifier or number of the corresponding second electronic device 20 through the voice interface 106. Alternatively or additionally, in case where the user has recorded voice tag information for the corresponding second electronic device 20, the first electronic device 10 may play the voice tag information recorded by the user for the second electronic device 20 while playing the corresponding identifier or number of the second electronic device 20 through the voice interface 106. For example, the identifier or number of the second electronic device 20 may be "device 1", "device 2", etc., and the voice tag information recorded by the user for it may be "medicine box", "wallet", etc.. In this case, when operating the navigation button, the user may accurately know whether the second electronic device 20 targeted by his item searching operation is correct or not. Here, by using the navigation button, the user may easily find the targeted second electronic device 20 under each function, without having to set a separate button for each function.

The first processing unit 102 determines the identifier of the second electronic device 20 targeted by the user's first instruction input according to the first instruction input and generates a search signal specific to the second electronic device 20. In one implementation, the storage unit 112 may store the correspondence between the identifier of each second electronic device 20 and the characteristics of the search signal specific to each second electronic device 20, so that the first processing unit 102 may determine the search signal specific to the second electronic device 20 based on the correspondence stored in the storage unit 112 and the identifier of the second electronic device 20 targeted by the first instruction input. By setting unique signal characteristics for each second electronic device 20, the identity confirmation between the first electronic device 10 and each second electronic device 20 may be easier.

In some embodiments, the characteristics of the search signal specific to the second electronic device 20 stored in the storage unit 112 include at least one of the frequency of the search signal (for example, the frequency of the Bluetooth signal configured for the communication between the first electronic device 10 and the second electronic device 20, the duration of the search signal, and the spectral characteristics of the search signal. For example, the search signal specific to the second electronic device 20 generated by the first processing unit 102 may have a frequency uniquely corresponding to the second electronic device 20, may have a signal duration uniquely corresponding to the second electronic device 20, or may have spectral characteristics uniquely corresponding to the second electronic device 20.

Next, the first transmitting unit 108 may transmit the search signal specific to the second electronic device 20 generated by the first processing unit 102 to the second electronic device 20.

The second receiving unit 210 of the second electronic device 20 receives a signal from the first transmitting unit 108, and the second processing unit 202 determines whether the received signal is a search signal specific to itself (i.e., the second electronic device 20) and transmits a control signal to the prompt unit 206 if it is determined that the received signal is a search signal specific to itself.

The prompt unit 206 may perform a prompt operation according to the control signal. As mentioned above, the prompt unit 206 may include, for example, a buzzer, and the buzzer may emit a buzzer sound according to the control signal. For another example, the prompt unit 206 may include a speaker, and the speaker may emit a sound corresponding to the control signal according to the control signal.

The prompt operation performed by the prompt unit 206 may last for a predetermined period of time (for example, 10 seconds). The predetermined time period is usually sufficient for the user to find the corresponding second electronic device 20 according to the prompt operation. In some cases, if the user fails to find the corresponding second electronic device 20 within the predetermined time period, the prompt unit 206 may repeat the prompt operation by perform a predetermined operation on the first instruction unit 104 by the user such as singly pressing a "repeat button".

### Recording Function

As described above, the first electronic device 10 may store a voice prompt corresponding to each second electronic device 20, so that when receiving the user's first instruction input, the corresponding voice prompt may also be played so that the user can confirm whether his input is correct through the voice prompt.

Specifically, it may be determined that the user wants to record a voice prompt for a certain second electronic device 20 through a second instruction input received by the first instruction unit 104 that is different from the foregoing first instruction input. In one example, the user may press the navigation button (such as the page up/down button) on the first instruction unit 104 to find a certain second electronic device 20 and long press the dedicated recording button to determine to record a voice prompt for the second electronic device 20. In this example, when the user presses the navigation button on the first instruction unit 104, the first electronic device 10 may also play the corresponding number of the second electronic device 20 through the voice interface 106, so that the user may confirm whether the targeted second electronic device 20 is correct or not before recording the voice prompt.

In addition, in some embodiments, when the paring operation is performed on the first electronic device 10 and the second electronic device 20 as described above during the initialization phase, the recording function may be executed after the pairing operation is completed. Specifically, after the second electronic device 20 is paired, the first electronic device 10 may play the number or identifier of the second electronic device 20 through the voice interface 106, and may receive a user's specific instruction input (such as pressing on the "record" button) to receive the voice tag information recorded by the user for the second electronic device 20.

In this case, the first processing unit 102 instructs the voice interface 106 to receive the voice tag information associated with the second electronic device 20 according to the second instruction input, and may store the voice tag information in the storage unit 112 in association with the identifier of the second electronic device 20. The voice tag information may, for example, indicate the type of the item associated with the second electronic device 20, such as a wallet, a key, etc., or may indicate precautions for the item associated with the second electronic device 20. For example, for the second electronic device 20 associated with the wallet, the voice tag information may be "paying utility bills".

In addition, the first processing unit 102 may determine to stop recording according to the user's further button input on the first instruction unit 104 (such as pressing the stop button or stopping long pressing the recording button, etc.) or by determining whether the length of the voice tag information is greater than a predetermined time threshold (such as 30 seconds).

Thereafter, upon receiving a third instruction input that is different from the first instruction input, the first processing unit 102 may instruct the voice interface 106 to playback the voice tag information associated with the second electronic device 20 (and potentially the identifier or number of the second electronic device 20). For example, the third instruction input may be an item identification navigation input. The user may press the navigation button (such as the page up/down button) on the first electronic device 10 to determine the second electronic device 20 to be searched. When the navigation button on the first electronic device 10 is pressed to switch to each second electronic device 20, the first electronic device 10 may play the voice tag information recorded by the user for the second electronic device 20 through the voice interface 106. In case that the user does not record the voice tag information for the second electronic device, the first electronic device 10 may play the identifier or number of the second electronic device 20 through the voice interface 106.

In some embodiments, the voice tag information may be erased or overwritten. For example, the voice tag information may be erased or re-recorded through different user inputs received by the first instruction unit 104, and the storage unit 112 may be updated accordingly.

### Reverse Search Function

In some cases, a plurality of second electronic devices 20 may be associated with a plurality of items of the same type, so when the user gets one of the items, it is not certain which item he got. For example, a plurality of second electronic devices 20 may be attached to a plurality of books with similar specifications, and the user may not be able to determine which book he has when he gets one of the books. In this case, there is a need for the user to determine the identity of the second electronic device 20 from the first electronic device 10 through the second electronic device 20.

To this end, the second instruction unit 204 of the second electronic device 20 may receive the user's fourth instruction input. Here, for the consideration of miniaturization of the second electronic device 20, the second instruction unit 204 may only include one physical or virtual button, and the reverse search function is triggered when the user presses the button. In some implementations, for the purpose of preventing misoperation, the fourth instruction input to trigger the reverse search function may be a certain number of short pressing on the button (such as twice) or long pressing on the button for a predetermined time period (such as 3 or 5 seconds). The second processing unit 202 may generate a reverse search signal specific to the second electronic device 20 according to the fourth instruction input of the user. Here, similar to the search signal specific to the second electronic device 20 sent by the first electronic device 10, the reverse search signal may also have signal characteristics specific to the second electronic device 20. The signal characteristics may include, for example, at least one of the frequency of the signal, the duration of the signal, and the spectral characteristics of the signal. For example, the reverse search signal may have a frequency uniquely corresponding to the second electronic device 20, may have a signal duration uniquely corresponding to the second electronic device 20, or may have frequency spectral characteristics uniquely corresponding to the second electronic device 20.

The second transmitting unit 208 transmits the reverse search signal generated by the second processing unit 202 to the first electronic device 10.

The first receiving unit 110 of the first electronic device 10 receives the reverse search signal from the second electronic device 20, and the first processing unit 102 determines the identifier of the second electronic device 20 according to the reverse search signal.

Further, the first processing unit 102 may retrieve the voice tag information associated with the second electronic device 20 from the storage unit 112 according to the determined identifier of the second electronic device 20, and instruct the voice interface 106 to play the voice tag information. In case that the user did not record the voice tag information for the second electronic device 20, the first electronic device 10 may play the identifier or number of the second electronic device 20 through the voice interface 106. In this way, users can easily distinguish multiple items of similar types.

### Power Reminder Function

As mentioned above, for the consideration of miniaturization, the second electronic device 20 usually uses a micro battery or a rechargeable battery as its power supply unit. In some cases, the first electronic device 20 uses a storage battery or a rechargeable battery as its power supply unit. In these cases, reminding the user of the remaining battery is a very useful function.

To this end, the first electronic device 10 and/or the second electronic device 20 may be respectively equipped with a power detection unit, and the power detection unit may be a power detection chip or the like (not shown in the figure). Taking the first electronic device 10 as an example, the power detection chip may detect the remaining power of the power supply unit in the first electronic device 10, and may send battery warning information to the first processing unit 102 when the remaining power is lower than a certain power threshold (such as 10% of the rated power). The first processing unit 102 may perform the battery reminder operation according to the battery warning information, such as issuing a voice reminder through the voice interface 106, buzzing through a buzzer, or flashing a breathing light, etc..

In addition, a plurality of power thresholds may be set such that different power alarm information may be sent to the first processing unit 102 when the remaining power detected by the power detection chip is lower than each power threshold, so that the first processing unit 102 may perform different battery reminder operations based on the different battery alarm information.

### Memo Reminder Function

The user may set a memo reminder through this function, so that the electronic system 1 may send a memo reminder to the user at a time corresponding to the memo reminder. The memo reminder may include reminder time and reminder content. In some other examples, the memo reminder may also include a reminder object (i.e., the targeted second electronic device 20) and/or a reminder location. The format of the memo reminder voice may be, for example: "Remind me to take medicine at 7 am every day", "Remind me to get up at 7 am on weekdays", "Remind me to bring my keys at 7 am tomorrow morning", "Remind me at 8 am next Monday morning to go to work", "Let device 1 remind me to take medicine at 7 am every day", "Let device 2 remind me to take my keys at 7 am on weekdays", etc..

Specifically, the voice interface 106 of the first electronic device 10 may receive the user's memo reminder voice and send it to the first processing unit 102. The first processing unit 102 performs semantic analysis on the memo reminder voice to determine the reminder time and reminder content. For example, supposing the memo reminder voice input by the user is "Remind me to get up at 7 am on weekdays", the first processing unit 102 performs voice analysis to determine that the reminder time is "7 am on weekdays" and the reminder content is "get up". The first processing unit 102 may set a built-in timer (not shown in the figure) according to the reminder time, and play the reminder content "get up" through the voice interface 106 when the timer reaches the reminder time.

In addition, when receiving the memo reminder voice input by the user, the first processing unit 102 may also respond to the memo reminder voice input by the user through the voice interface 106. For example, the first processing unit 102 may respond to the memo reminder voice input by the user by instructing the voice interface 106 to play a specific music or specific voice (for example, "instruction received"). In addition, in some embodiments, the response may also include at least one of the reminder time, the reminder content, the reminder object (i.e., the targeted second electronic device 20), and the reminder location. For example, the format of the response may be "The setting is successful, I will remind you to get up at 7 am on weekdays" or "The setting is successful, I will remind you at 8 am tomorrow."

Further, the memo reminder function can also be combined with the search function. Specifically, in addition to determining the reminder time and reminder content, the first processing unit 102 also determines the reminder object of the memo reminder voice (that is, the targeted second electronic device 20). For example, supposing the memo reminder voice input by the user is "Let device 1 remind me to take medicine at 7 am every day", the first processing unit 102 performs voice analysis to determine that the reminder time is "7 am every day" and the reminder content is "take medicine", the second electronic device 20 targeted by the memo reminder is "device 1". The first processing unit 102 may set its built-in timer (not shown in the figure) according to the reminder time, play the reminder content "take medicine" through the voice interface 106 when the timer reaches the reminder time, and send a memo reminder signal to the second electronic device 20 as the device 1 through the first transmitting unit 108. The second electronic device 20 performs a prompt operation when receiving the signal, such as emitting a buzzer sound. Here, the memo reminder signal is similar to the search signal described above in conjunction with the search function.

In addition, the first electronic device 10 according to the present disclosure can also support functions such as date query and voice help. For example, when querying a date, the user can input a voice query request (such as "what day is today", "what day is next Wednesday", "what day is January 1st", etc.) through the first instruction unit 104. The first processing unit 102 may perform semantic analysis on the voice query request to determine the query content, determine the date targeted by the voice query request according to the calendar built in the processor chip or queries from a server through the network, and play the date as the response information to the user through the voice interface 106. For another example, when seeking for voice help, the user may input a voice query request (such as "What can you do?", "Can you help me?", "What functions do you have?", "Search How to use the item search mode?" "How to record?" etc.). The first processing unit 102 may perform semantic analysis on the voice query request to determine the query content, determine an answer corresponding to the voice query request based on the help content built-in in the processor chip or by querying from the server through network, etc., and play the answer as the response message to the user through the voice interface 106.

The present disclosure may be implemented as a method, a device, a chip circuit and/or a computer program product. The computer program product may include a computer-readable storage medium, on which computer-readable program instructions for performing various aspects of the present disclosure are contained. The chip circuit may include circuit units for performing various aspects of the present disclosure.

According to one aspect of the present disclosure, an electronic system is provided comprising a first electronic device and at least one second electronic device, each second electronic device being associated with a target item, wherein the first electronic device comprises: a first instruction unit configured to receive a first instruction input; a first processing unit configured to determine, based on the first instruction input, an identifier of a second electronic device targeted by the first instruction input, and generate a search signal specific to the second electronic device; and a first transmitting unit configured to transmit the generated search signal specific to the second electronic device to the second electronic device, and wherein the second electronic device comprises: a second receiving unit configured to receive a signal from the first transmitting unit; a second processing unit configured to determine whether the signal received from the first transmitting unit is a search signal specific to the second electronic device, and transmit a control signal to a prompting unit in response to determining that the signal received from the first transmitting unit is a search signal specific to the second electronic device; and the prompt unit configured to perform a prompt operation according to the control signal.

In some embodiments, the first electronic device further comprises a storage unit storing correspondence between an identifier of the second electronic device and characteristics of the search signal specific to the second electronic device, and wherein the first processing unit determines the search signal specific to the second electronic device according to the correspondence and the identifier of the second electronic device.

In some embodiments, the characteristics of the search signal specific to the second electronic device comprise at least one of frequency of the search signal, duration of the search signal, and spectral characteristics of the search signal.

In some embodiments, the prompt unit comprises a buzzer, and the buzzer is configured to emit a buzzer sound according to the control signal.

In some embodiments, the prompt unit comprises a speaker, and the speaker is configured to emit a sound corresponding to the control signal according to the control signal.

In some embodiments, the first electronic device further comprises a voice interface, and wherein the first instruction unit is further configured to receive a second instruction input different from the first instruction input, the first processing unit is further configured to instruct the voice interface to receive voice tag information associated with the second electronic device according to the second instruction input, and to store the voice tag information in the storage unit in association with the identifier of the second electronic device.

In some embodiments, the first processing unit is further configured to instruct the voice interface to play the voice tag information associated with the second electronic device in response to receiving a third instruction input different from the first instruction input.

In some embodiments, the first electronic device further comprises a first receiving unit, and the second electronic device further comprises a second processing unit, a second instruction unit and a second transmitting unit, and wherein the second instruction unit is configured to receive a fourth instruction input of the user; the second processing unit is configured to generate a reverse search signal specific to the second electronic device according to the fourth instruction input of the user; the second transmitting unit is configured to transmit the reverse search signal to the first electronic device; the first receiving unit is configured to receive the reverse search signal from the second electronic device; and the first processing unit is configured to determine an identifier of the second electronic device according to the reverse search signal.

In some embodiments, the first processing unit is further configured to retrieve voice tag information associated with the second electronic device from a storage unit of the first electronic device based on the identifier of the second electronic device, and instruct a voice interface of the first electronic device to play the voice tag information.

In some embodiments, the first electronic device comprises one of a smart speaker, a timer, a listener, a radio, a recorder, and an e-book.

According to another aspect of the present disclosure, an electronic device is provided comprising: a first instruction unit configured to receive a first instruction input; a first processing unit configured to determine, based on the first instruction input, an identifier of a second electronic device targeted by the first instruction input, and generate a search signal specific to the second electronic device, wherein the second electronic device is associated with a target item; and a first transmitting unit configured to transmit the generated search signal specific to the second electronic device to the second electronic device.

In some embodiments, the electronic device further comprises a storage unit storing correspondence between an identifier of the second electronic device and characteristics of the search signal specific to the second electronic device, and wherein the first processing unit determines the search signal specific to the second electronic device according to the correspondence and the identifier of the second electronic device.

In some embodiments, the characteristics of the search signal specific to the second electronic device comprises at least one of frequency of the search signal, duration of the search signal, and spectral characteristics of the search signal.

In some embodiments, the electronic device further comprises a voice interface, and wherein the first instruction unit is further configured to receive a second instruction input different from the first instruction input, the first processing unit is further configured to instruct the voice interface to receive voice tag information associated with the second electronic device according to the second instruction input, and to store the voice tag information in the storage unit in association with the second electronic device.

In some embodiments, the first processing unit is further configured to instruct the voice interface to play the voice tag information associated with the second electronic device in response to receiving a third instruction input different from the first instruction input.

In some embodiments, the electronic device further comprises a first receiving unit, and wherein the first receiving unit is configured to receive a reverse search signal specific to the second electronic device from the second electronic device; and the first processing unit is configured to determine the identifier of the second electronic device according to the reverse search signal.

In some embodiments, the first processing unit is further configured to retrieve voice tag information associated with the second electronic device from a storage unit of the electronic device according to the identifier of the second electronic device, and instruct a voice interface of the electronic device to play the voice tag information.

In some embodiments, the electronic device comprises one of a smart speaker, a timer, a listener, a radio, a recorder, and an e-book.

According to still another aspect, a method for controlling an electronic device is provided comprising: receiving a first instruction input; determining, based on the first instruction input, an identifier of the second electronic device targeted by the first instruction input, and generating a search signal specific to the second electronic device, wherein the second electronic device is associated with a target item; and transmitting the generated search signal specific to the second electronic device to the second electronic device.

In some embodiments, the method further comprises: obtaining correspondence between an identifier of the second electronic device and characteristics of the search signal specific to the second electronic device; and determining the search signal specific to the second electronic device according to the correspondence and the identifier of the second electronic device.

In some embodiments, the characteristics of the search signal specific to the second electronic device comprises at least one of frequency of the search signal, duration of the search signal, and spectral characteristics of the search signal.

In some embodiments, the method further comprises: receiving a second instruction input different from the first instruction input; and obtaining voice tag information associated with the second electronic device according to the second instruction input, and storing the voice tag information in association with the second electronic device.

In some embodiments, the method further comprises: playing voice tag information associated with the second electronic device in response to receiving a third instruction input different from the first instruction input.

In some embodiments, the method further comprises: receiving a reverse search signal specific to the second electronic device from the second electronic device; and determining the identifier of the second electronic device according to the reverse search signal.

In some embodiments, the method further comprises: retrieving voice tag information associated with the second electronic device according to the identifier of the second electronic device, and playing the voice tag information.

In some embodiments, the electronic device comprises one of a smart speaker, a timer, a listener, a radio, a recorder, and an e-book.

The various embodiments of the present disclosure have been described above, and the above description is exemplary, not exhaustive, and is not limited to the disclosed embodiments. Without departing from the scope and spirit of the illustrated embodiments, many modifications and changes are obvious to those of ordinary skill in the art. The terms used herein is intended to best explain the principles, practical applications, or technical improvements of the technologies in the market, or to enable other ordinary skilled in the art to understand the embodiments disclosed herein.

## Claims

1. An electronic system comprising:
a first electronic device and at least one second electronic device, each second electronic device being associated with a target item, wherein
the first electronic device comprises:
a first instruction unit configured to receive a first instruction input;
a first processing unit configured to determine, based on the first instruction input, an identifier of a second electronic device targeted by the first instruction input, and generate a search signal specific to the second electronic device; and
a first transmitting unit configured to transmit the generated search signal specific to the second electronic device to the second electronic device, and wherein
the second electronic device comprises:
a second receiving unit configured to receive a signal from the first transmitting unit;
a second processing unit configured to determine whether the signal received from the first transmitting unit is a search signal specific to the second electronic device, and transmit a control signal to a prompting unit in response to determining that the signal received from the first transmitting unit is a search signal specific to the second electronic device; and
the prompt unit configured to perform a prompt operation according to the control signal.

2. The electronic system of claim 1, wherein the first electronic device further comprises a storage unit storing correspondence between an identifier of the second electronic device and characteristics of the search signal specific to the second electronic device, and wherein
the first processing unit determines the search signal specific to the second electronic device according to the correspondence and the identifier of the second electronic device.

3. The electronic system of claim 2, wherein the characteristics of the search signal specific to the second electronic device comprise at least one of frequency of the search signal, duration of the search signal, and spectral characteristics of the search signal.

4. The electronic system of claim 1, wherein the first electronic device further comprises a first receiving unit, and the second electronic device further comprises a second processing unit, a second instruction unit and a second transmitting unit, and wherein
the second instruction unit is configured to receive a fourth instruction input of the user;
the second processing unit is configured to generate a reverse search signal specific to the second electronic device according to the fourth instruction input of the user;
the second transmitting unit is configured to transmit the reverse search signal to the first electronic device;
the first receiving unit is configured to receive the reverse search signal from the second electronic device; and
the first processing unit is configured to determine an identifier of the second electronic device according to the reverse search signal.

5. The electronic system of claim 4, wherein the first processing unit is further configured to retrieve voice tag information associated with the second electronic device from a storage unit of the first electronic device based on the identifier of the second electronic device, and instruct a voice interface of the first electronic device to play the voice tag information.

6. The electronic system of claim 1, wherein the first electronic device comprises one of a smart speaker, a timer, a listener, a radio, a recorder, and an e-book.

7. An electronic device comprising:
a first instruction unit configured to receive a first instruction input;
a first processing unit configured to determine, based on the first instruction input, an identifier of a second electronic device targeted by the first instruction input, and generate a search signal specific to the second electronic device, wherein the second electronic device is associated with a target item; and
a first transmitting unit configured to transmit the generated search signal specific to the second electronic device to the second electronic device.

8. The electronic device of claim 7, wherein the electronic device further comprises a storage unit storing correspondence between an identifier of the second electronic device and characteristics of the search signal specific to the second electronic device, and wherein
the first processing unit determines the search signal specific to the second electronic device according to the correspondence and the identifier of the second electronic device.

9. The electronic device of claim 8, wherein the characteristics of the search signal specific to the second electronic device comprises at least one of frequency of the search signal, duration of the search signal, and spectral characteristics of the search signal.

10. The electronic device of claim 8, wherein the electronic device further comprises a voice interface, and wherein the first instruction unit is further configured to receive a second instruction input different from the first instruction input,
the first processing unit is further configured to instruct the voice interface to receive voice tag information associated with the second electronic device according to the second instruction input, and to store the voice tag information in the storage unit in association with the second electronic device.

11. The electronic device of claim 10, wherein the first processing unit is further configured to instruct the voice interface to play the voice tag information associated with the second electronic device in response to receiving a third instruction input different from the first instruction input.

12. The electronic device of claim 7, wherein the electronic device further comprises a first receiving unit, and wherein
the first receiving unit is configured to receive a reverse search signal specific to the second electronic device from the second electronic device; and
the first processing unit is configured to determine the identifier of the second electronic device according to the reverse search signal.

13. The electronic device of claim 12, wherein the first processing unit is further configured to retrieve voice tag information associated with the second electronic device from a storage unit of the electronic device according to the identifier of the second electronic device, and instruct a voice interface of the electronic device to play the voice tag information.

14. The electronic device of claim 7, wherein the electronic device comprises one of a smart speaker, a timer, a listener, a radio, a recorder, and an e-book.

15. A method for controlling an electronic device comprising:
receiving a first instruction input;
determining, based on the first instruction input, an identifier of the second electronic device targeted by the first instruction input, and generating a search signal specific to the second electronic device, wherein the second electronic device is associated with a target item; and
transmitting the generated search signal specific to the second electronic device to the second electronic device.
